# EUROPEAN PATENT APPLICATION

(11) **EP 4 712 212 A1**
(43) Date of publication of application: **18.03.2026**
(21) Application number: 24904257.3
(22) Date of filing: 10.12.2024
(51) Int. Cl.: H01M 10/6557, H01M 10/613, H01M 10/6551, H01M 10/647

(54) **COOLING DEVICE AND BATTERY CELL STACK INCLUDING SAME**

(30) Priority: 11.12.2023 KR 20230179017; 06.12.2024 KR 20240180968
(71) Applicant: LG Energy Solution, Ltd., Seoul 07335 (KR)
(72) Inventor: JANG, Yoonho, Daejeon 34122 (KR); NAM, Jinmoo, Daejeon 34122 (KR); BAE, Gyujong, Daejeon 34122 (KR); JEONG, Myunggeun, Daejeon 34122 (KR)
(74) Representative: Plasseraud IP
(86) International application number: PCT/KR2024/020230
(87) International publication number: WO 2025/127692

(57) **Abstract**

A battery cell stack according to various embodiments comprises: a plurality of battery cells; one or more cooling devices in contact with at least one of the plurality of battery cells; and a case accommodating the plurality of battery cells and the one or more cooling devices, wherein each of the one or more cooling devices includes a refrigerant flow path therein, is configured to cool at least one of the battery cells by flowing a refrigerant through the refrigerant flow path, and may include a first surface and a second surface having different thermal conductivities. Various other embodiments are possible.

## Description

### Technical Field

The present disclosure relates to a cooling device and a battery cell stack comprising the same.

### Background Art

As a rechargeable battery, the secondary batteries are widely used in portable mobile devices, such as digital cameras, mobile phones, and laptop computers. Recently, the use of the secondary batteries has been expanded to include mediumand-large scale devices, such as electric vehicles and energy storage systems (ESS), in addition to small devices like portable electronic devices.

A number of the secondary batteries may be electrically connected to each other and housed in a module case to form a single battery module. Also, a battery pack may be formed by connecting a number of the battery modules.

However, when a number of secondary battery (battery cells) stacks or a number of secondary battery modules are tightly packed in a small space, they may become vulnerable to thermal events. In other words, when an event such as thermal runaway occurs in one battery cell, the event may spread to another battery cell. When such an event of heat transfer occurs, serious problems such as fire and explosion may occur, and when a number of secondary battery modules are included in a higher-level device such as single battery pack, battery rack, and ESS, the fire or explosion may also spread to other secondary battery modules and the like included in the higher-level device.

Conventionally, placing cooling devices for cooling the secondary batteries on the external sides of the secondary batteries or on bottom of the module cases has been taken into consideration, however, recently a new method of cooling, which is by attaching the cooling devices directly onto the battery cell surfaces to allow direct heat exchange between the refrigerant flowing inside the cooling devices and the battery cell surfaces is being studied as a way of improving cooling performance of the secondary batteries.

Normally, such cooling devices are made of metal with high thermal conductivity to increase heat exchange effectiveness.

### Detailed Description of the Invention

### Technical Goals

When a cell-surface direct water cooling method of interposing cooling devices between battery cells to allow direct contact between cooling devices and battery cell surfaces is applied, although the cooling effectiveness may improve, a probability of serious problems occurring such as fire and explosion may also increase when an event such as thermal runaway occurs in a battery cell as cooling devices made of a material with high thermal conductivity are placed between the battery cells and thus result in acceleration of heat transfer.

Example embodiments of the present disclosure are devised to address at least some of the above-mentioned problems and to provide a cooling device and a battery cell stack comprising the same, for improving cooling performance while effectively preventing heat transfer by forming a cooling device using two members made of different materials with different thermal conductivities, which is disposed to be in direct contact with the battery cell surface inside a secondary battery module (or battery cell stack) and cools the battery cell through the flow of refrigerant.

### Technical solutions

A battery cell stack according to example embodiments may include a plurality of battery cells, one or more cooling devices in contact with at least one of the plurality of battery cells, and a case housing the plurality of battery cells and the one or more cooling devices, wherein the one or more cooling devices each include a refrigerant channel on an inner side, are configured to cool at least one of the plurality of battery cells by flowing a refrigerant through the refrigerant channel, and includes a first surface and a second surface which forms an opposite surface of the first surface, and the first surface and the second surface are made of materials with different thermal conductivities.

The cooling devices used for cooling the secondary batteries according to example embodiments may include the first surface, and the second surface facing the first surface, which are made of materials with different thermal conductivities, wherein the first surface is in contact with a first battery cell and the second surface is in contact with a second battery cell adjacent to the first battery cell, includes a refrigerant channel on an inner side, and is configured to cool the first battery cell and the second battery cell by flowing the refrigerant through the refrigerant channel.

### Effects of the Invention

According to the example embodiments, a cooling device and a battery cell stack with improved cooling performance may be provided.

According to the example embodiments, it is possible to improve safety by preventing heat transferring to a neighboring battery cell or other battery module (or other battery cell stack) even when an event such as thermal runaway.

According to the example embodiments, it is still possible to provide an improved secondary battery module (or a battery cell stack) in terms of energy density as it is possible to achieve a similar performance without an additional member such as an insulating sheet for preventing heat transfer.

### Brief Description of Drawings

FIG. 1 is a schematic exploded perspective view of a secondary battery module 10 according to an example embodiment of the present disclosure.
FIG. 2 is a schematic cross-sectional view of the secondary battery module 10 according to an example embodiment of the present disclosure.
FIG. 3 is a schematic perspective view for describing a structure of a cooling device 300 according to an example embodiment of the present disclosure.
FIG. 4 is a schematic cut-away sectional view for describing a flow of a refrigerant on an inner side of the cooling device 300 according to an example embodiment of the present disclosure.
FIG. 5A is a schematic cross-sectional side view of the cooling device 300 according to an example embodiment of the present disclosure.
FIG. 5B is a schematic cross-sectional side view of the cooling device 300 according to an example embodiment of the present disclosure.
FIG. 5C is a schematic cross-sectional side view of the cooling device 300 according to an example embodiment of the present disclosure.
FIG. 5D is a schematic cross-sectional side view of the cooling device 300 according to an example embodiment of the present disclosure.
FIG. 6 is a schematic cross-sectional view of the secondary battery module 10 according to other example embodiments of the present disclosure.

### Mode for Carrying Out the Invention

Before example embodiments of the present disclosure is described, terms or words used in the present disclosure and the accompanying claims are not to be limited to general definitions or dictionary definitions, and the terms and words are to be construed under the principle that an inventor may appropriately define a concept of a term in order to describe their disclosure in the best way. Thus, example embodiments described in the present disclosure and configurations illustrated in the accompanying drawings are merely the most desirable example embodiments and to not represent all of the technical spirit of the present disclosure, and it should be understood that various equivalents and modifications may replace the example embodiments and configurations may be present at the time of filing the application of the present disclosure.

The same reference numerals or symbols shown in each drawing of the present disclosure indicate parts or components that perform substantially the same function. For ease of explanation and understanding, different example embodiments may be described using the same reference numerals or symbols. That is, even though components having the same reference numerals are shown in the plurality of drawings, the plurality of drawing do not mean one example embodiment.

In the following descriptions, terms in singular form include terms in a plural form unless an apparently and contextually conflicting description is present. Terms such as "including" or "comprising" is to indicate that a feature, a number, an operation, an action, an element, a component, or a combination thereof is present, and it should be understood that these terms are not to exclude in advance a possibility that one or more other features, numbers, operations, actions, elements, components, or combinations thereof may be present or added.

Also, it should be noted in advance that expressions such as an upper side, an upper surface, a lower side, a lower surface, a side surface, a front surface, or a rear surface is based on directions illustrated in the drawings and that these expressions may change when a direction of a corresponding object changes.

In addition, in the present disclosure and claims, terms including ordinal numbers such as "first" or "second" may be used to distinguish between elements. These ordinal numbers are used to distinguish the same or similar components from each other, and the meaning of the term should not be limitedly interpreted due to the use of these ordinal numbers. As an example, elements combined with such ordinal numbers should not be construed as limiting the use order or arrangement order by the number. If necessary, each ordinal number may be used interchangeable.

Hereinafter, example embodiments of the present disclosure will be described with reference to the drawings. However, the spirit of the present disclosure is not limited to the presented example embodiments. As an example, a person skilled in the art who understands the spirit of the present disclosure may suggest other example embodiments that are included within the scope of the spirit of the present disclosure through addition, change or deletion, however, this is also considered to be included within the scope of the spirit of the present disclosure. The shapes and sizes of elements in the drawings may be exaggerated for more clear description.

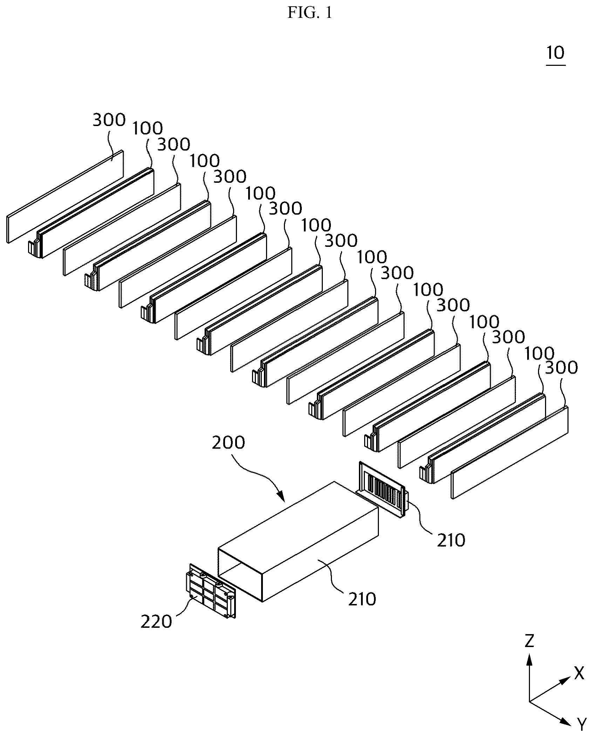

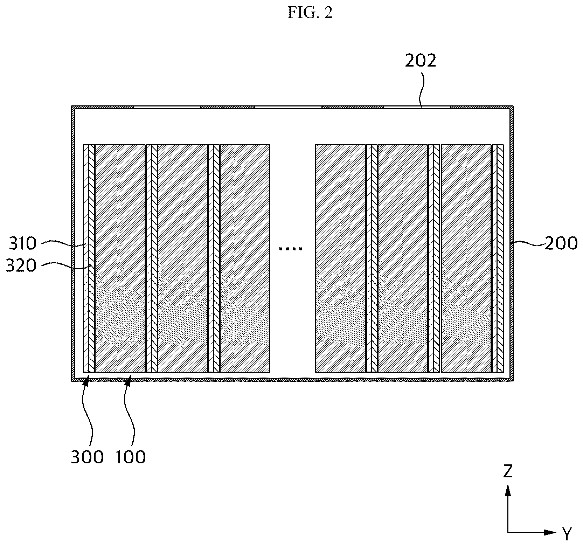

FIG. 1 is a schematic exploded perspective view of the secondary battery module 10 according to an example embodiment of the present disclosure. FIG. 2 is a schematic cross-sectional view of the secondary battery module 10 according to an example embodiment of the present disclosure.

Referring to FIGS. 1 and 2, the secondary battery module 10 according to example embodiments may include a plurality of battery cells 100, one or more cooling devices 300, and a case 200 housing these components inside.

The battery cells 100 (e.g., secondary battery) may be stacked in a row in one direction (e.g., a direction parallel to the Y-axis of FIG. 1 and 2) as illustrated in FIGS. 1 and 2.

Each of the battery cells 100 may include, for example, a pouch-type battery cell.

For example, the pouch-type battery cell may be formed by housing an electrode case into a laminate sheet pouch case, including a resin layer and a metal layer, and heat-bond the sealing portion of the pouch case. That is, the battery cell 100 may substantially have a rectangular sheet structure.

However, the secondary battery cell 100 included in the secondary battery module 10 according to example embodiments of the present disclosure is not limited to the pouch-type battery cell, and various types of battery cells, such as prismatic battery cell and cylindrical battery cell, may be applied within the scope of the present disclosure and example embodiments.

Although not illustrated in detail in the drawings, the battery cell 100 may include at least a first electrode (e.g., positive electrode), a second electrode (e.g., a negative electrode), an electrode assembly including a separation film, a battery case (e.g., a pouch case), and electrolyte. For example, each battery cell 100 may be electrically connected to other electrode cell 100 in series or in parallel through a component such as a bus bar.

Meanwhile, the cooling device 300 (e.g., a cooling jacket) may be interposed between the battery cells 100 and/or between the battery cell 100, which is disposed at outermost end from the secondary battery module 10, and the case 200.

For example, a plurality of battery cells 100 and the cooling devices 300 may be stacked alternately within the case 200. Alternatively, the plurality of battery cells 100 and the cooling devices 300 may form a battery pack without being housed in the case 200 in a stacked form.

The cooling device 300 and the plurality of battery cells 100 may be arranged based on a surface cooling method. For example, the cooling device may be stacked to face a wider surface of the battery cell 100 and exchange heat with the battery cell 100 while being in direct contact with the wider surface of the battery cell 100 the cooling device is facing.

Although FIG. 1 illustrates the battery cell 100 and the cooling device 300 being provided alternately one after another, it is also possible to form a predetermined unit of plurality of battery cells 100 and provide the battery cell unit between two cooling devices 300. As an example, each of the battery cell unit interposed between the two cooling devices 300 may be defined as one having a predetermined battery capacity (e.g., 150Ah to 350 mA) through a combination or two or more battery cells 100. As another example, the battery cell unit may be defined using a predetermined size (such as a length and width).

According to example embodiments, the cooling device 300 (e.g., within the case 200 of the secondary battery module 10 or within a pack case of a battery pack) may be disposed to be in direct contact with the battery cell 100, and accordingly, at least one adjacent battery cell 100 may be cooled more effectively using refrigerant flowing inside the cooling device 300.

For example, when the cooling device 300 is interposed between two adjacent battery cells 100 (e.g., a first battery cell and a second battery cell), the cooling device 300 may each include a first surface and a second surface facing away from the first surface, be in contact with the first battery cell through the first surface and be in contact with the second battery cell through the second surface. For example, the second surface may form an opposite surface of the first surface.

According to example embodiments of the present disclosure, the cooling device 300 may be configured so that materials forming the first surface and the second surface have different thermal conductivities.

For example, in one cooling device 300, the thermal conductivity of a material forming one surface (that is, the first surface) may be less than a predetermined value (e.g., less than 5 watts per meter-kelvin (W/m·K), and more specifically, more than 0.0001 W/m·K and less than 5 W/m·K)), and the thermal conductivity of a material forming an opposite surface (that is, the second surface) is higher than the predetermined value (e.g., 10 W/m·K or higher, and more specifically, more than 10 W/m·K and less than 10000 W/m·K).

As an example, the first surface of the cooling device 300 may be made of a nonmetallic material, and the second surface facing the first surface may be made of a metallic material.

That is, the first surface may be made of thermal resin. For example, the first surface may be made of a material with adhesive properties while having a relatively lower thermal conductivity than that of the second surface. For example, the first surface, as a thermal conductive adhesive material, may be made of at least one of silicone, urethane, or acrylic.

The cooling device 300 according to example embodiments may be formed by bonding a first member 310 and a second member 320, which are made of materials with different thermal conductivities.

For example, the cooling device 300 may be formed by bonding the first member 310, which is made of a nonmetallic material, and the second member 320, which is made of a metallic material. In this case, the first surface may be made of a material with relatively low thermal conductivity by the first member 310 and the second surface may be made of a material with relatively high thermal conductivity by the second member 320.

Generally, the cooling device 300 may cool the battery cell 100 by allowing heat exchange between the refrigerant flowing through an inner space (that is, the refrigerant channel), and an adjacent battery cell 100. That is, in order to facilitate more effective heat exchange between the refrigerant and the battery cell 100, the entire area of the cooling device 300 facing the battery cell 100 may be made of a material with high thermal conductivity.

However, when the cooling device 300 with high thermal conductivity is interposed between the battery cells 100, while the heat exchange for cooling may be enhanced as a contact area between the cooling device 300 and the battery cells 100 is maximized, a thermal propagation phenomenon may be accelerated by the cooling device 300 with high thermal conductivity when an event such as the thermal runaway occurs from a battery cell 100.

According to example embodiments of the present disclosure, by configuring thermal conductivities of the materials forming one surface (the first surface) and an opposite surface (the second surface) of the cooling device 300 interposed between the battery cells 100 (or between an outermost battery cell 100 and the case 200) differently, the heat transfer to another battery cell in contact with the opposite side of the cooling device 300 may be minimized even when the thermal runaway occurs from one of the battery cells in contact with the one surface of the cooling device 300.

For example, the cooling device 300 according to example embodiments of the present disclosure may be capable of improving cooling effect and preventing heat transfer with respect to the battery cell, without a separate insulating sheet.

Meanwhile, as illustrated in FIG. 2, each battery cell 100 may be in contact with two cooling devices 300 (e.g., a first cooling device and a second cooling device) on one surface and another surface opposite to each other.

Here, the thermal conductivity of materials forming one surface (e.g., a first surface of the first cooling device) of a cooling device (e.g., the first cooling device) which is in contact with one surface of the battery cell 100, and one surface of another cooling device (e.g., the second cooling device) which is in contact with another surface of the battery cell 100 (e.g., a second surface of a second cooling device) may be different.

For example, when one surface of the first cooling device in contact with one surface of a particular battery cell 100 is formed of the first member 310 with relatively low thermal conductivity, one surface of the second cooling device in contact with another surface of the particular battery cell 100 may be formed of the second member 320 with relatively high thermal conductivity.

Specifically, each of the secondary battery modules 10 forming the entire battery cells 100 may be disposed to be in contact with at least one surface of the cooling device 300 formed by the second member 320 with high thermal conductivity. Accordingly, through the second member 320 with high thermal conductivity, the heat exchange between each of the battery cells 100 and the refrigerant may be properly performed.

For example, the cooling device 300 including at least one surface formed by the first member 310 with low thermal conductivity may be disposed on each of both surfaces of the battery cell 100 forming the secondary battery module 10. That is, heat transfer towards any direction from the battery cell 100 may be minimized, even when the thermal runaway occurs from any one of the battery cells 100, through the first member 310 with low thermal conductivity.

The case 200 may house the plurality of battery cells 100 and the cooling devices 300, and form an exterior of the secondary battery module 10. For example, the case 200 may include a body frame 210, which has open ends and an internal storage space, and an end frame 220 that covers the open ends of the body frame 210.

As an example, the case 200 may further include a venting hole 202 provided to discharge a venting gas, generated from the battery cell 100, from the secondary battery module 10. The number, location, and shape of the venting hole 202 may be varied within a range that can be easily modified by a person skilled in the art. For example, although in an example embodiments of FIG. 2 the venting hole 202 is illustrated to be formed on an upper side of the case 200 so that the venting gas can be discharged through an upper part of the secondary battery module 10, example embodiments of providing the venting hole 202 on a side surface or a bottom surface of the case 200 so that the venting gas is discharged through a lateral part or lower part of the secondary battery module 10 is also possible.

For example, with respect to a battery pack, when the secondary battery module 10 (or a battery cell stack) is housed in a battery pack case, a space for the venting gas to flow may be formed in a region between one surface of the secondary battery module 10, in a direction in which the venting hole 202 is formed, and the battery pack case.

As an example, when the venting hole 202 is formed on a lower surface of the case 200 so that the venting gas can be discharged through the lower part of the secondary battery module 10 (or, battery cell stack), a space created between the lower surface of the secondary battery module 10 (or, a battery cell stack) and a lower surface of a battery pack case may be used as a space for the venting gas to flow.

However, in a structure configured to discharge the venting gas through the lower part of the secondary battery module 10 (or, a battery cell stack), an inlet and an outlet of the cooling device 300 may each be configured to be connected to a cooling pipe, which is disposed at lower part of the space provided, so that the venting gas can flow along. That is, the cooling pipe may allow the refrigerant to be supplied through the cooling channel on the inner side of the cooling device 300 through each inlet, and discharge the refrigerant, heated while flowing along the refrigerant channel from the cooling device 300, through each outlet.

By disposing the cooling pipe connected to the inlet and outlet of the cooling device 300, and the space of the secondary battery module 10 (or, a battery cell stack) for the venting gas to flow, in adjacent positions, the design flexibility of the battery pack's space may be secured.

Meanwhile, unlike the examples shown in FIGS. 1 and 2, or other drawings, with respect to the secondary battery module 10 according to an example embodiment, a stack of the plurality of battery cells 100 and cooling devices 300 may be mounted into the pack case directly as a part of a battery pack (cell pack), without the case 200.

For example, when forming a single battery pack by housing a plurality of secondary battery modules 10 in the pack case, although each of the secondary battery modules 10 may be mounted inside the pack case with its exterior formed by the case 200, the secondary battery module 10 may also be directly mounted into the pack case in a form of a battery cell stack without being surrounded by the case 200 (or, being surrounded by a 4-sided case that does not cover an upper/lower side of the secondary battery module 10).

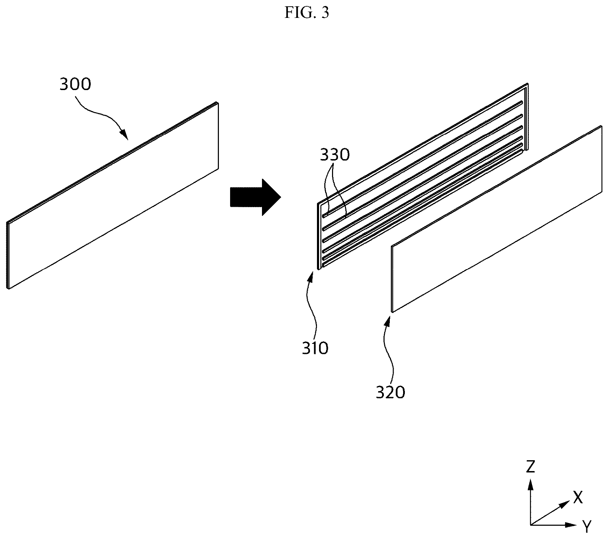

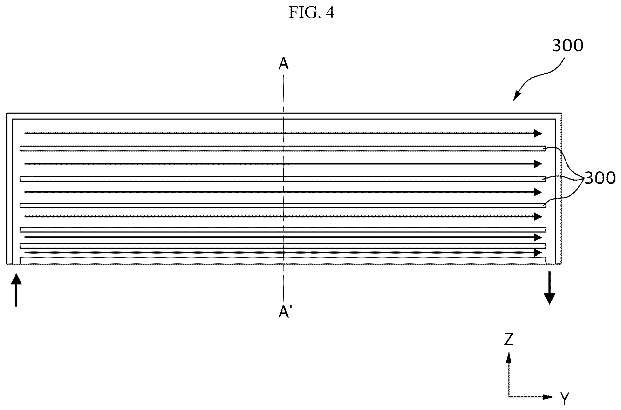

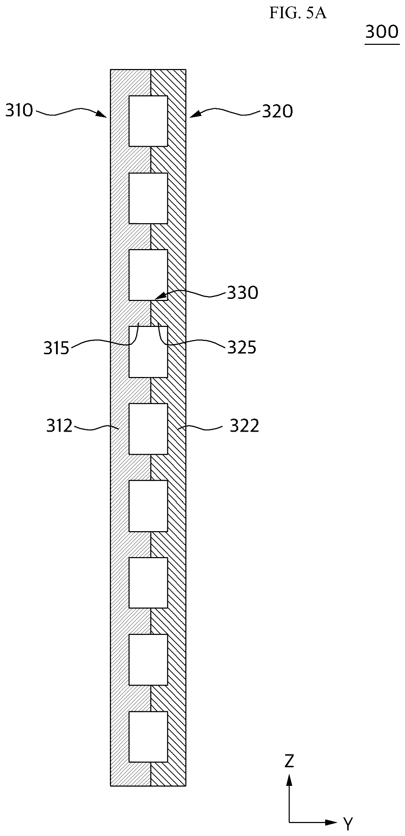

FIG. 3 is a schematic perspective view for describing a structure of the cooling device 300 according to an example embodiment of the present disclosure. FIG. 4 is a schematic cut-away sectional view for describing a flow of a refrigerant on an inner side of the cooling device 300 according to an example embodiment of the present disclosure. FIGS. 5A through 5D are schematic cross-sectional side views of the cooling device 300 according to example embodiments of the present disclosure.

Referring to FIGS. 3 through 5D, the cooling device 300 according to example embodiments may be formed by coupling two members (e.g., the first member 310 and the second member 320) made of different materials.

For example, the cooling device 300 may be formed by coupling the first member 310 with relatively low thermal conductivity and the second member 320 with relatively high thermal conductivity.

As an example, the cooling device 300 may be formed by bonding the first member 310 made of a nonmetallic material and the second member 320 made of a metallic material. As an example, the first member 310 may be made of a urethane material, and the second member 320 may be made of an aluminum material.

The first member 310 and the second member 320 may be coupled by bonding by an adhesive material with chemically resistant properties (e.g., an adhesive tape). For example, as the adhesive material is applied on a part corresponding to a partition wall 330, formed to be protruded from at least one of the first member 310 and the second member 320 toward the inner side of the cooling device 300, the first member 310 and the second member 320 may be bonded. Such an adhesive material may be formed using a material with thermosetting properties. As an example, an adhesive layer 240 may be formed of a material with high adhesiveness, electric insulation, and watertightness.

Meanwhile, at least one of the first member 310 and the second member 320 may be made of a material having adhesive properties in itself. As an example, a nonmetallic first member 310 may be made of thermal resin. As another example, the nonmetallic first member 310 may include a thermal conductive adhesive material.

That is, the thermal conductive material (or, the thermal conductive adhesive material) may include at least one of a silicone material, a urethane material, and an acrylic material.

According to another example embodiments, at least one of the first member 310 and the second member 320 may be made of a material with insulation properties. That is, the first member 310 may be made of a nonmetallic material (or a metallic material) with excellent insulation properties, and the second member 320 may be made of a metallic material with relatively high electrical conductivity and thermal conductivity.

Meanwhile, a space for the refrigerant to flow (that is, the refrigerant channel) may be formed on the inner side of the cooling device 300 by the partition wall 330.

For instance, as illustrated in FIG. 4, the refrigerant may flow into the cooling device 300 through the space between the partition walls 330 and be discharged in a direction indicated by the arrow. However, the shape of the partition wall of the cooling device 300 according to example embodiments of the present disclosure is not limited to the shape illustrated in FIG. 4 and other drawings, and various shapes of partition walls corresponding to design conditions of the secondary battery module 10, such as an amount of the refrigerant flowing, may be implemented.

For example, the partition wall 330 may be configured to allow the refrigerant flowing into the inner side of the cooling device 300 to flow in the +Y-axis direction of FIG. 4, change its course in the -Y-axis direction, and repeat the process. For example, in cooling device 300, unlike the example illustrated in FIG. 4, the inlet and the outlet may be provided at positions adjacent to each other, or multiple inlets or multiple outlets may be provided.

According to example embodiments, at least one of the first member 310 and the second member 320 may include outer side walls 312 and 322, facing the battery cell 100 or the case 200, and the partition wall 330 (e.g., a first partition wall 315, and a second partition wall 325) protruded from the outer walls 312 and 322, towards the inner side of the cooling device 300.

As an example, as illustrated in FIG. 5A, the first member 310 and the second member 320 may each include the outer walls 312 and 322 and the partition wall 330 represented by reference numerals 315 and 325, and an internal space created by bonding of the first partition wall 315 of the first member 310 and the second partition wall 325 of the second member 320 may be used as a flow path of the refrigerant. Here, according to an example embodiment, the first member 310 and the second member 320 may be made of materials with different thermal conductivities, but may have symmetrical shapes.

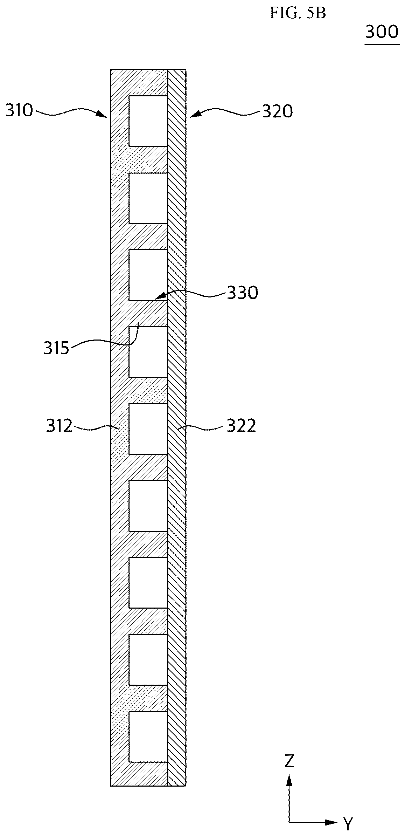

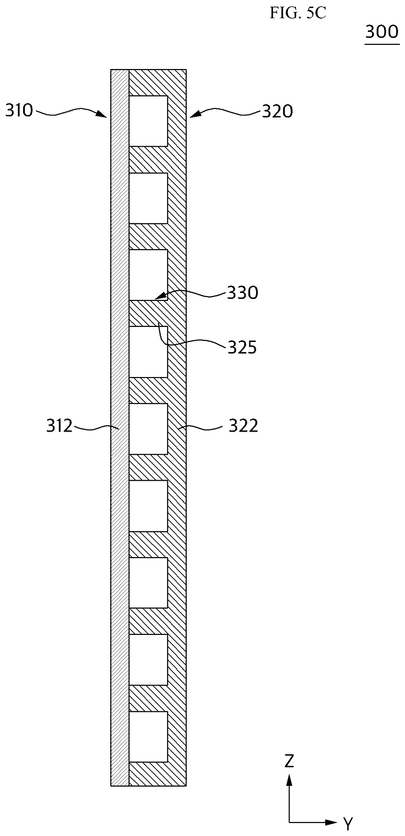

As another example, as illustrated in FIGS. 5B and 5C, in the cooling device 300, only one of the first member 310 and the second member 320 may include the partition wall 330. That is, in the cooling device 300, the first member 310 made of a material with low thermal conductivity may be provided with the partition wall 330 (that is, the first partition wall 315) and the second member 320 made of a material with high thermal conductivity may not be provided with a separate partition wall, other than the outer side wall 322. Alternatively, in the cooling device 300, the partition wall 330 (that is, the second partition wall 325) may only be provided on the second member 320 which is made of a material with high thermal conductivity, and a separate partition wall may not be provided on the second member 320 which is made of a material with low thermal conductivity.

For example, when the first member 310 is made of a nonmetallic material and the second member 320 is made of a metallic material, and the partition wall 330 of the cooling device 300 may be formed only on the first member 310 and the second member 320 does not include a protruded part such as the partition wall 330, as illustrated in FIG. 5B, the cooling device 300 with relatively low weight being able to perform the same function as the example shown in FIG. 5A or FIG. 5C, in terms of forming the flow path of the refrigerant, may be formed, thereby providing the secondary battery module 10 with improved energy density.

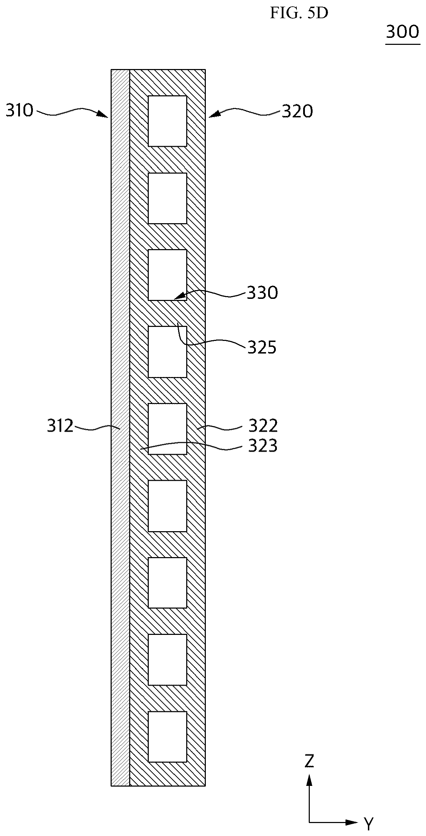

However, in the cooling device 300 according to example embodiments, as illustrated in FIG. 5D, one of the first member 310 and the second member 320 may be formed only of outer side walls 312 and 322 and the other may be formed to include outer side walls 312 and 322, the partition wall 330 represented by reference numerals 315, and 325, and an inner side wall 323. For example, the first member 310 may be made of a nonmetallic material (e.g., thermal resin) and the second member 320 may be made of a metallic material. In this case, as a contacting area between the first member 310 and the second member 320 is greater than that of the other structures illustrated in FIGS. 5A through 5C, the bonding between or assembly of the first member 310 and the second member 320 may become easier and a structural safety may be obtained.

According to an example embodiment, when an inner side wall 323 is included in the cooling device 300, a thickness of the inner side wall may be formed to be smaller than thicknesses of other outer side walls.

According to an example embodiment, when an inner side wall 323 is included in the cooling device 300, a thickness of the outer side wall 322 of a member (e.g., the second member 320) including the inner side wall may be formed to be greater than the outer side wall 312 of a member (e.g., the first member 310) not including the inner side wall.

For example, in a structure in which the inner side wall and the partition wall are provided only on the second member 320, a thickness of the outer side wall 322 of the second member 320 may be formed to be a thickness corresponding to a sum of thicknesses of the outer side wall 312 of the first member 310 and the inner side wall 323 of the second member 320.

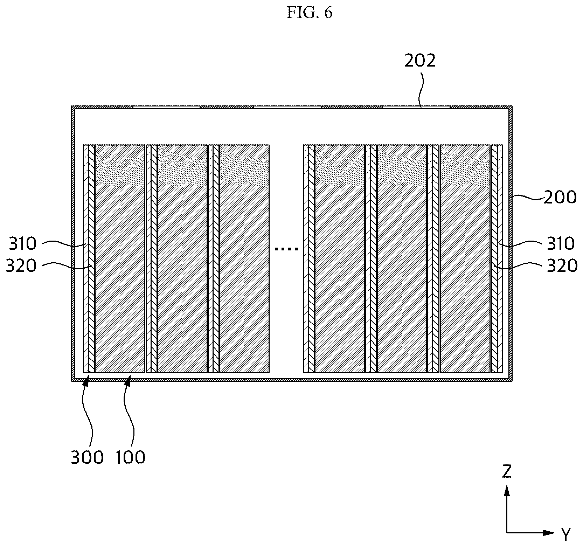

FIG. 6 is a schematic front view of the secondary battery module 10 according to another example embodiment of the present disclosure.

Referring to FIG. 6, the secondary battery module 10 according to an example embodiment, may include the cooling device 300 disposed between the battery cells 100, which are disposed at outermost part, and the case 200.

The cooling device 300 located at an outermost part of the secondary battery module 10 (that is, the cooling device 300 disposed directly between the battery cell 100 and the case 200), while formed by bonding the first member 310 with relatively low thermal conductivity to the second member with relatively high thermal conductivity, may be configured so that, unlike the example shown in FIG. 2, one surface (e.g., the second surface) of the cooling device 300, formed by the second member 320 with high thermal conductivity, faces an adjacent battery cell 100, and one surface (e.g., the first surface) of the cooling device 300, formed by the first member 310 with low thermal conductivity, faces an adjacent case 200.

That is, the first member 310 may be made of thermal resin with a predetermined adhesive properties, and the second member 320 may be made of a metallic material with better thermal conductivity than thermal resin. In this case, the first member 310 may also be used to bond the second member 310 to the case 200.

Meanwhile, although not illustrated, in the secondary battery module 10 according to another example embodiment, at least one of the cooling devices 300 may include a first part disposed between the battery cells 100 and a second part formed to be extended from the first part. That is, the first part may be extended in direction parallel to the Z-axis as shown in FIG. 6, and the second part may be extended in a direction other than the Z-axis.

According to example embodiments, the second part, similar to the first part, may be formed by bonding the first member 310 with low thermal conductivity to the second member 320 with high thermal conductivity, and may also be formed to allow, or not allow, flow of the refrigerant through a space inside. For example, the second part may cover a portion of one side of the battery cell 100 (e.g., an upper side of the battery cell 200 facing the venting hole 202). For example, the second part may be disposed at a position that allows the second part to guide the venting gas towards the venting hole 202, when the venting gas is generated by an event such as thermal runaway, instead of being transferred to other battery cells 100.

The secondary battery module 10 according to example embodiments of the present disclosure may be used in electric vehicles, battery charging stations, and for other green energy technologies using batteries, such as solar power generation and wind power generation. In addition, the battery may also be used for eco-friendly electric vehicles or hybrid vehicles for preventing climate change by reducing air pollution and greenhouse gases.

However, although terms indicating directions such as "upper" and "lower" are used in the present disclosure, it is to be understood by those skilled in the art that the terms are merely for ease of explanation, and may vary according to locations of a target object, an observer, and the like.

The expression in the present disclosure that something is electrically connected may indicate that an object to be connected is, when connected through a connection mean, in a state in which a current may flow to a connected object by forming an electrical circuit. The connection mean is not particularly limited as long as an electrical connection is possible, but it may be a direct contact between objects to be connected or a wire through which a current can flow.

While the present disclosure has been described in detail in connection with above example embodiments, however, the scope of the present disclosure is not limited to thereto, and it is to be understood by those skilled in the art that the present disclosure is intended to cover various modifications and equivalent arrangements within the spirit and scope of the appended claims. In addition, the above-described example embodiments may be implemented with some elements thereof removed, and each example embodiment may be implemented.

## Claims

1. A battery cell stack comprising:
a plurality of battery cells;
one or more cooling devices in contact with at least one of the plurality of battery cells; and
a case housing the plurality of battery cells and the one or more cooling devices,
wherein the one or more cooling devices comprise a refrigerant channel on an inner side, are configured to cool at least one of the plurality of battery cells by flowing a refrigerant through the refrigerant channel, and comprise a first surface and a second surface which forms an opposite surface of the first surface, and
the first surface and the second surface are made of materials with different thermal conductivities.

2. The battery cell stack of claim 1, wherein the first surface is made of a nonmetallic material, and
the second surface is made of a metallic material.

3. The battery cell stack of claim 2, wherein the first surface is made of thermal resin.

4. The battery cell stack of claim 3, wherein the first surface is made of at least one of a silicon material, a urethane material, and an acrylic material.

5. The battery cell stack of claim 3, wherein the first surface is configured to bond the second surface to one of the plurality of battery cells with each other.

6. The battery cell stack of claim 1, wherein the one or more cooling devices are in plurality,
at least one of the plurality of cooling devices is between two adjacent battery cells among the plurality of battery cells, and
at least another one of the plurality of cooling devices is between a battery cell, which is at an outermost end among the plurality of battery cells, and one surface of the case which is adjacent to the battery cell disposed at the outermost end.

7. The battery cell stack of claim 6, wherein the second surface is bonded to one of the two adjacent battery cells or to the one surface of the case by the first surface.

8. The battery cell stack of claim 1, wherein the one or more cooling devices are formed by a nonmetallic first member bonded to a metallic second member.

9. The battery cell stack of claim 8, wherein the refrigerant channel forms a space between the first member and the second member.

10. The battery cell stack of claim 8, wherein at least one of the first member and the second member comprises:
an outer side wall which faces one of the plurality of battery cells or the case; and
a partition wall that protrudes from the outer side wall towards the inner side to form the refrigerant channel.

11. The battery cell stack of claim 10, wherein at least one of the first member and the second member further comprises an inner side wall which is connected to the partition wall.

12. The battery cell stack of claim 8, wherein the first member and the second member each comprises an outer side wall which faces one of the plurality of battery cells or the case,
one of the first member and the second member comprises a partition wall that protrudes from the outer side wall towards the inner side to form the refrigerant channel, and
another one of the first member and the second member does not comprise the partition wall.

13. The battery cell stack of claim 8, wherein the first member is made of at least one of silicone, urethane, or an acrylic material.

14. The battery cell stack of claim 1, wherein a material forming the first surface has a thermal conductivity less than at least 5 watts per meter-kelvin (W/m·K), and
a material forming the second surface has a thermal conductivity greater than or equal to at least 10 W/m·K.

15. The battery cell stack of claim 1, wherein each of the plurality of battery cells and the one or more cooling devices are stacked alternately within the case.

16. The battery cell stack of claim 1, wherein, with respect to at least one of the one or more cooling devices, the first surface, made of a material with a thermal conductivity less than a predetermined value, faces the case, and the second surface, made of a material with a thermal conductivity greater than or equal to the predetermined value, faces the battery cell.

17. The battery cell stack of claim 1, wherein a material forming the first surface has a thermal conductivity less than a predetermined value,
a material forming the second surface has a thermal conductivity greater than or equal to the predetermined value,
with respect to at least one of the one or more cooling devices, the first surface is in contact with a first battery cell, and
the second surface is in contact with a second battery cell which is adjacent to the first battery cell.
